Europäisches Patentamt

European Patent Office

Office européen des brevets

(19)

(11) **EP 0 572 292 B1**

(12) **FASCICULE DE BREVET EUROPEEN**

(45) Date de publication et mention
de la délivrance du brevet:
**16.04.1997 Bulletin 1997/16**

(51) Int Cl.⁶: **G02B 27/10**, G02B 5/32,
G02F 1/1335, H04N 9/31

(21) Numéro de dépôt: **93401178.4**

(22) Date de dépôt: **07.05.1993**

(54) **Séparateur chromatique de lumière et projecteur d'image utilisant un tel séparateur**

Farbstrahlteiler und Abbildungsprojektor der diesen benutzt

Colour beamsplitter and image projector using the same

(84) Etats contractants désignés:
**DE GB IT NL**

(30) Priorité: **22.05.1992 FR 9206272**

(43) Date de publication de la demande:
**01.12.1993 Bulletin 1993/48**

(73) Titulaire: **THOMSON-CSF**
**75008 Paris (FR)**

(72) Inventeurs:
• **Nicolas, Christophe**
**F-92402 Courbevoie Cedex (FR)**
• **Loiseaux, Brigitte**
**F-92402 Courbevoie Cedex (FR)**
• **Joubert, Cécile**
**F-92402 Courbevoie Cedex (FR)**

• **Huignard, Jean-Pierre**
**F-92402 Courbevoie Cedex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 383 646     EP-A- 0 492 640
WO-A-88/10545       GB-A- 2 222 892
GB-A- 2 235 849     US-A- 4 850 685
US-A- 5 011 284

• PATENT ABSTRACTS OF JAPAN vol. 13, no. 375
(P-921)21 Août 1989 & JP-A-11 29 205
• PATENT ABSTRACTS OF JAPAN vol. 14, no. 27
(P-992)(3970) 19 Janvier 1990 & JP-A-12 67 612

## Description

L'invention se rapporte à un séparateur chromatique de lumière, du type permettant de former au moins deux faisceaux monochromes destinés chacun à être modulé spatialement. Elle concerne aussi un projecteur d'image utilisant un tel séparateur chromatique.

Dans le cadre du développement des téléviseurs à haute définition, on cherche à obtenir des images de grandes dimensions (de l'ordre d'un mètre de diagonale) au format 16/9 (rapport de la longueur à la largeur), et comportant un grand nombre de pixels, 1 million de pixels par exemple.

Pour générer de telles images vidéo, on s'oriente actuellement vers des dispositifs de projection d'images qui utilisent des techniques de modulation spatiale de la lumière. Dans ces dispositifs de projection, l'image polychrome est obtenue par la superposition, sur un écran de projection, de trois images monochromes de couleurs rouge, verte et bleue. Chaque image monochrome est d'abord formée sur la surface d'un écran modulateur spatial de lumière appelée dans la suite de la description "imageur".

L'imageur est constitué le plus souvent par un écran du type L.C.D. (de l'anglais "Liquid Crystal Display") comprenant un arrangement matriciel de cellules à cristaux liquides, chaque cellule correspondant à un pixel. Un faisceau de lumière monochrome et polarisée est modulé spatialement par l'imageur, et l'image projetée résulte de cette modulation.

Généralement, les différents faisceaux monochromes (vert, rouge et bleu) sont obtenus à l'aide d'un dispositif séparateur chromatique de lumière éclairé par un faisceau de lumière blanche. Il est à noter que par l'expression "faisceau monochrome", nous entendons définir un faisceau de lumière colorée notamment suivant une couleur dite primaire telle que bleu, vert ou rouge, ceci par opposition à un faisceau de lumière blanche contenant plusieurs couleurs primaires. Bien entendu un tel faisceau monochrome peut avoir aussi bien une bande spectrale relativement large qu'une bande spectrale réduite du type d'un rayonnement monochromatique.

Les images formées par les trois imageurs sont projetées sur l'écran de projection à l'aide d'un objectif unique commun aux trois images monochromes, ou bien à l'aide de trois objectifs, soit en projection frontale soit en rétroprojection.

Les projecteurs de ce type présentent un avantage important sur les systèmes à tubes cathodiques, avantage qui réside dans une meilleure compacité. Leur encombrement reste cependant relativement important, au point que l'ensemble des constructeurs cherche à réduire encore cet encombrement, particulièrement pour les projecteurs du type à rétroprojection (rétroprojecteurs) pour lesquels toute la longueur des trajets optiques entre les imageurs et l'écran de projection est comprise dans l'encombrement.

Il est à noter que dans ces projecteurs utilisant un ou des imageurs LCD pour moduler spatialement un faisceau monochrome, une part importante de l'encombrement vient du dispositif d'illumination, c'est-à-dire du système optique de séparation chromatique et de transport de la lumière, de la source d'éclairage à chacun des imageurs LCD.

De tels rétroprojecteurs sont bien connus, et des exemples typiques en sont publiés notamment dans les deux documents suivants :

- "100 - in. Extra-Slim Liquid-Crystal Rear-Projection Display", Fukuda et al. (Hitachi), SID 1991 Digest, p. 423 ;
- "High Definition Liquid Crystal Projection TV", Noda et al. (Matsushita), Japan Display 1989, p. 256.

Un autre inconvénient de ces projecteurs d'image est que leur rendement lumineux est faible, du fait notamment de différences entre la forme de l'imageur à illuminer et la forme de la section du faisceau de lumière provenant de la source d'illumination. En effet, les sources d'illumination habituellement utilisées (par exemple, lampe à arc associée à un réflecteur) produisent en général un faisceau de rayons lumineux à section circulaire. Si l'on veut avec un tel faisceau éclairer un imageur LCD au format rectangulaire, le rectangle doit être inscrit dans la section circulaire. Dans ce cas, le rapport de la surface du rectangle à la surface du disque est au mieux de 0,54. Il y a donc pratiquement la moitié de l'énergie qui est perdue.

Un brevet français publié avec le n° 2 642 927 décrit comment réduire l'encombrement de ce type de projecteur d'image, en utilisant des miroirs holographiques, à la place de miroirs ordinaires dans le système optique de transport de la lumière. Le schéma optique est sensiblement le même que dans la première publication ci-dessus citée : les miroirs holographiques remplacent les miroirs ordinaires (métalliques) sur le trajet des faisceaux d'éclairement des imageurs. L'avantage qui en résulte vient de ce que dans cette configuration, un miroir holographique ne suit pas les lois de Descartes, c'est-à-dire qu'il peut dévier des rayons lumineux à 90°, sans être forcément incliné à 45° par rapport au faisceau incident. Par rapport à des miroirs ordinaires, on peut donc incliner davantage les miroirs holographiques pour un même angle de déviation, et réduire ainsi l'encombrement de ces miroirs.

Les éléments ou composants holographiques assurant notamment des fonctions de miroirs, sont en eux-mêmes bien connus. Ils sont obtenus par interférence et permettent d'assurer des fonctions optiques complexes dans des films tel que cela est décrit dans le document : "L. Solymar, D.J. Cooke, Volume Holography and Volume Gratings" - Academic Press (1981).

Les propriétés de ces composants holographiques en terme de sélectivité angulaire, spectrale ou de polarisation sont décrites par l'intermédiaire du formalisme d'ondes couplées dans le document : H. Kogelnik, Bell Syst. Techn. J. 48, p 2909 (1969).

Un miroir holographique tel qu'utilisé dans le brevet français n° 2 642 927 cité plus haut, consiste en un hologramme en volume enregistré dans un matériau photosensible.

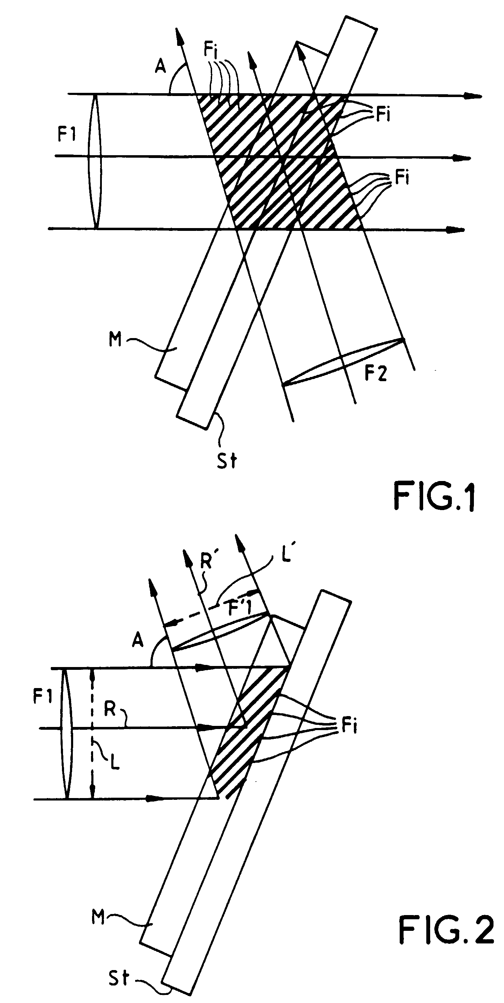

La figure 1 illustre une méthode classique d'enregistrement d'un hologramme. Le matériau photosensible M dont l'indice de réfraction est n, est déposé sur un support plan transparent St et on enregistre dans ce matériau un ou plusieurs réseaux périodiques d'indice de réfraction, à l'aide de deux faisceaux F1, F2 de rayons parallèles. Ces deux faisceaux F1, F2 sont issus d'une même source laser de longueur d'onde $\lambda_0$ (mesurée dans l'air), et ils se propagent suivant deux directions qui font entre elles un angle A dans le milieu d'indice n.

Lorsque ces faisceaux se croisent, il apparaît des franges d'interférences lumineuses Fi parallèles entre elles. La direction commune de ces franges est la bissectrice des deux directions de propagation des faisceaux F1, F2. Dans une direction perpendiculaire aux franges Fi et dans un milieu dont l'indice de réfraction est n, l'intensité lumineuse est modulée suivant un profil sinusoïdal dont la période P est donnée par la relation qui suit :

$$P = \frac{\lambda_\theta}{2\,n.\cos\,(A/2)}$$

Pour enregistrer un miroir holographique, on place dans le champ des franges d'interférences, le matériau photosensible et son support. Deux types de matériau photosensible sont utilisés couramment : les gélatines dichromatées et les photopolymères. L'exposition à la lumière provoque une modification de l'indice de réfraction du matériau. Les franges d'interférences, alternativement brillantes et sombres suivant un profil sinusoïdal, provoquent une modulation de l'indice de réfraction entre les valeurs $n_{max}$ et $n_{min}$. Cette modulation peut être sinusoïdale ; elle peut aussi présenter une forme différente : carrée, trapèze, par exemple, en fonction de la réponse du matériau photosensible (en fonction de sa résolution d'enregistrement). Par un procédé de fixage, chimique ou photochimique, cette modulation peut être figée dans le matériau. On remarque sur la figure 1 que le support transparent St peut être incliné par rapport aux franges Fi.

La figure 2 montre qu'après avoir enregistré la modulation d'indice dans le matériau M, si l'on supprime le faisceau F2 et qu'on illumine l'hologramme par le faisceau F1, les franges d'indice Fi enregistrées se comportent comme de multiples miroirs. Le faisceau F1 est défléchi en un faisceau F'1 qui est identique au faisceau F2 de la figure 1.

Soit R un des rayons du faisceau F1. Chaque portion d'hologramme comprenant une variation d'indice continue entre $n_{min}$ et $n_{max}$ se comporte comme un miroir pour le rayon R, et produit le rayon réfléchi R'. On retrouve l'angle A entre les rayons R et R' (dans le milieu d'indice n). Une simple variation d'indice entre $n_{min}$ et $n_{max}$ ne suffit pas à défléchir totalement le rayon R. Une partie de l'énergie continue à se propager à travers l'hologramme et rencontre d'autre variations $n_{min}$, $n_{max}$. Il se crée ainsi une multitude de rayons R'. A l'échelle du faisceau F1, s'il y a suffisamment de franches enregistrées dans l'hologramme, la totalité de l'énergie du faisceau F1 sera réfléchie en un faisceau F'1 qui est la reconstitution du faisceau F2.

Pratiquement, le résultat obtenu est que l'on a pu dévier d'un angle A un faisceau de rayons parallèles en utilisant un pseudo-miroir, ou miroir holographique, dont l'angle d'inclinaison par rapport au faisceau incident n'est pas forcément A/2 (ce qui serait obligatoirement le cas pour un miroir classique). Il y a donc un gain potentiel en encombrement par rapport à un miroir classique.

Une propriété intéressante du miroir holographique est celle d'anamorphose. On voit que dans le plan de la figure 2, la largeur L' du faisceau F'1 est plus faible que celle L de F1. Ceci n'est pas le cas dans une direction perpendiculaire au plan de la figure. On peut donc transformer un faisceau à section carrée en faisceau à section rectangulaire, ou encore un faisceau à section circulaire en faisceau à section elliptique. La demande de brevet EP-A-0 512 099, qui constitue de l'art antérieur dans le sens de l'article 54(3) CBE, décrit l'utilisation de miroirs holographiques dans un projecteur vidéo à cristal liquide, et signale que ces miroirs holographiques peuvent, par construction, réaliser une anamorphose du faisceau qui peut ainsi être adapté au format 16/9.

Les miroirs holographiques ont une autre propriété connue, qui est d'être sélectifs en longueur d'onde.

En effet, les hologrammes sont enregistrés avec de la lumière laser, ceci afin de produire des franges d'interférence. Si on remplace, à la restitution, le faisceau laser F1 par un faisceau de lumière blanche de même géométrie, on obtient un faisceau réfléchi qui présente une répartition spectrale centrée autour de $\lambda_o$ : en conséquence le miroir holographique est aussi un miroir dichroïque. A l'aide de trois hologrammes enregistrés avec des lasers rouge, vert et bleu, on peut fabriquer un système optique qui sépare les trois couleurs primaires généralement utilisées à la visualisation d'images. A noter que pour certains matériaux photosensibles, on enregistre à une longueur d'onde et, par traitement chimique, on transforme la modulation d'indice pour que le miroir fonctionne à une longueur d'onde différente.

Enfin, il faut signaler aussi la propriété de polarisation de la lumière présentée par des hologrammes. Le coefficient de réflexion d'un miroir dépend de la direction de polarisation du faisceau de lumière incidente. En particulier, à l'angle d'incidence dit de Brewster, le coefficient de réflexion s'annule pour la direction de polarisation parallèle au plan d'incidence. Le rayonnement réfléchi est donc polarisé dans la direction perpendiculaire au plan d'incidence. Pour un rayon incident sur une interface air-miroir, et si le milieu du miroir est d'indice de réfraction égal par exemple à 1,5 (l'indice de l'air étant égal à 1), l'angle de Brewster est égal à 56° 40'.

Les matériaux photosensibles ont également un indice de réfraction sensiblement égal à celui du verre, soit 1,5. Quand des franges d'indice sont enregistrées dans le matériau, il s'agit de variations d'indice autour de cette valeur moyenne. Une valeur maximale typique de modulation est : $n_{max} - n_{min} = 0,14$.

Si un miroir holographique ne suit pas les lois de Descartes, par contre, un rayon incident sur la couche de matériau photosensible suit les lois de la réfraction. Autrement dit, avant qu'un rayon ne se réfléchisse sur le réseau de franges, il faut qu'il ait pénétré dans le milieu d'indice n = 1,5. Ainsi, la réflexion sur le réseau de franges d'indice doit être considéré comme une réflexion d'un rayon provenant d'un milieu d'indice n = 1,5 sur un milieu d'indice moyen n = 1,5. Ces considérations sont valables aussi lorsque les rayons traversent d'abord le support transparent (verre d'indice 1,5) du miroir holographique, avant d'entrer dans le matériau photosensible.

Or, on montre que dans le cas d'égalité des indices de réfraction entre les deux milieux d'une interface-miroir, l'angle de Brewster égale 45°. Un angle d'incidence de 45° (dans le milieu d'indice 1,5) produit donc un faisceau réfléchi qui est polarisé dans une direction perpendiculaire au plan d'indice. Cette propriété polarisante des miroirs holographique est particulièrement utile à l'illumination des imageurs du type à cristal liquide.

L'invention concerne un dispositif optique de séparation chromatique de la lumière appelé séparateur chromatique de lumière, et elle a pour but de permettre la réalisation de tels séparateurs avec un très faible encombrement.

A cette fin, l'invention propose d'utiliser des miroirs holographiques enregistrés en volume, afin d'une part de réaliser un montage d'une très grande compacité, et afin d'autre part de tirer profit de toutes les propriétés de ce type de miroir, notamment l'amamorphose de la section des faisceaux de lumière, en vue d'améliorer le rendement en énergie lumineuse.

L'invention concerne le séparateur chromatique de lumière défini dans la revendication 1 et le projecteur d'images défini dans la revendication 10.

Selon l'invention, un séparateur chromatique de lumière, éclairé par un faisceau de lumière blanche dit faisceau primaire, comporte au moins deux miroirs sélectifs en longueur d'onde réfléchissant chacun un faisceau monochrome, au moins deux des miroirs sélectifs étant des miroirs holographiques imbriqués l'un dans l'autre.

Par l'expression "imbriqués l'un dans l'autre", nous entendons définir un agencement dans lequel les plans des miroirs holographiques se coupent, c'est-à-dire sont croisés.

Une telle imbrication est particulièrement intéressante, notamment en ce qu'elle permet, une forte diminution de l'encombrement des miroirs, une parfaite symétrie du trajet des faisceaux monochromes et qu'elle se prête à une exploitation simultanée de toutes les propriétés des miroirs holographiques.

L'invention concerne aussi un projecteur d'image utilisant un tel séparateur chromatique de lumière. Elle trouve une application particulièrement (mais non exclusivement) avantageuse dans les projecteurs à rétroprojection, projecteurs dans lesquels il est plus facile, par rapport à la projection frontale, de projeter chaque image monochrome sur l'écran de projection à l'aide d'un objectif dédié à chaque imageur.

L'invention sera mieux comprise, et d'autres avantages qu'elle procure apparaîtront à la lecture de la description qui suit de certains de ses modes de réalisation, description faite en référence aux figures annexées parmi lesquelles :

- les figures 1 et 2 déjà décrites se rapportent à l'art antérieur, et montrent schématiquement des miroirs holographiques ;
- la figure 3 est une vue schématique en coupe d'un séparateur chromatique de lumière suivant l'invention ;
- les figures 4a, 4b sont des vues en perspective d'un prisme parallélépipèdique servant à réaliser le séparateur chromatique de l'invention ;
- la figure 5 montre schématiquement un projecteur d'image suivant l'invention ;
- la figure 6 est une vue en coupe du projecteur d'image montré à la figure 5 ;
- la figure 7 montre une autre forme de réalisation du séparateur chromatique de l'invention ;
- la figure 8 illustre un découpage du parallélépipède montré aux figures 4a et 4b, permettant de réaliser deux miroirs imbriqués représentés à la figure 3 ;
- les figures 9 et 10 illustrent chacune particulièrement la réalisation de l'un et de l'autre des deux miroirs imbriqués montrés à la figure 3.

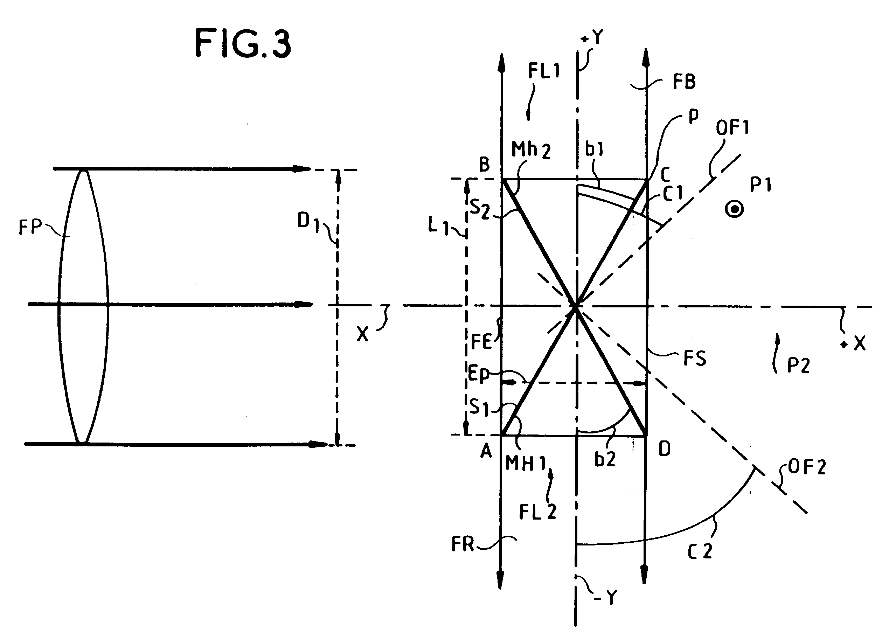

La figure 3 montre de manière schématique un séparateur chromatique de lumière SC conforme à l'invention. Le séparateur chromatique SC est formé dans un prisme p de forme parallélépipèdique contenant plusieurs miroirs Mh1, Mh2.

Suivant une caractéristique de l'invention, au moins deux de ces miroirs Mh1, Mh2 sont des miroirs holographiques imbriqués entre eux.

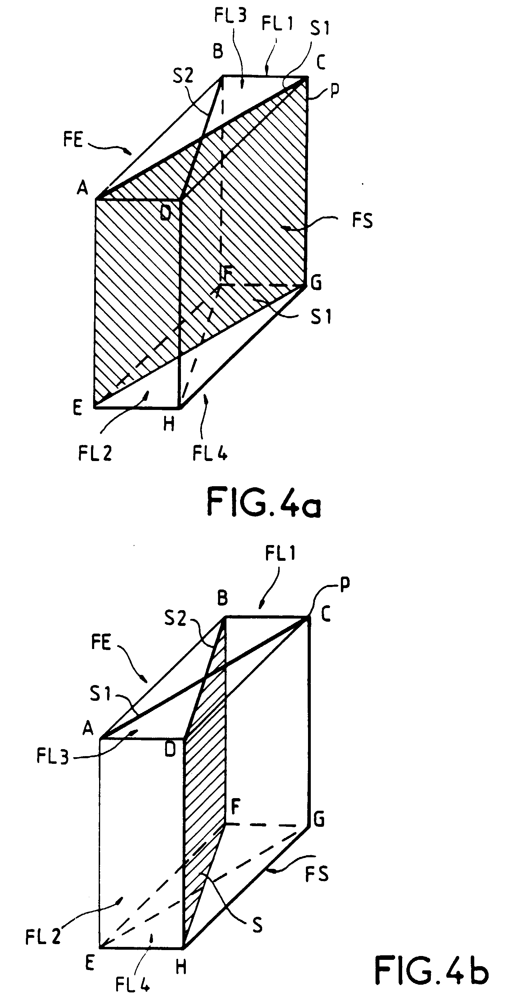

Les figure 4a, 4b sont des vues en perspective montrant le prisme ou parallélépipède p afin de mieux situer les positions des deux miroirs holographiques Mh1, Mh2, imbriqués.

Le parallélépipède p comporte dans l'exemple deux grandes faces opposées FE, FS de forme carrée ; ses quatre autres faces dites faces latérales FL1, FL2, FL3, FL4 sont rectangulaires, et il peut être avantageux de leur conférer un format 16/9, comme il est davantage expliqué dans une suite de la description.

Les coins du parallélépipède sont repérés A à H. Si l'on coupe le parallélépipède par deux plans, dont l'un passe par les coins A, C, E, G et l'autre par les coins B, D, H, F, on définit une première et une seconde surfaces diagonales S1, S2 matérialisées respectivement à la figure 4a et à la figure 4b.

Ces deux surfaces diagonales S1,S2 sont des surfaces croisées, elles représentent chacune l'emplacement d'un miroir holographique Mh1, Mh2 dans un séparateur chromatique SC conforme à l'invention.

En référence à nouveau à la figure 3, cette dernière montre le parallélépipède p par une vue de dessus, c'est-à-dire que les miroirs holographiques Mh1, Mh2 s'étendent perpendiculairement au plan de la figure. Les deux miroirs holographiques Mh1, Mh2 sont imbriqués, et leur face S1,S2 constituent des surfaces diagonales comme les surfaces S1, S2 des figures 4a, 4b et qui se croisent comme ces dernières.

Le parallélépipède p est en un matériau transparent, du verre ou du plastique par exemple. L'une de ses grandes faces carrées FE, appelée face d'entrée, est éclairée par un faisceau de lumière blanche appelé faisceau primaire FP. Le faisceau primaire FP est collimaté suivant la direction de son axe de propagation X. L'axe de propagation X est normal au plan de la face d'entrée FE et passe par le centre de cette dernière, et donc par la ligne formée par l'intersection des deux miroirs imbriqués Mh1, Mh2.

Sur la figure 3, les miroirs holographiques Mh1, Mh2 sont représentés de manière simple par un trait épais, mais bien entendu ils comportent chacun de façon en elle-même classique, un support transparent, portant une couche de matériau photosensible (formant toute la surface S1,S2 du miroir) dans laquelle ont été enregistrés, de manière traditionnelle, des hologrammes correspondant aux caractéristiques recherchées pour ces miroirs. En conséquence dans les couches photosensibles des deux miroirs holographiques Mh1, Mh2, ont été enregistrées des franges d'interférences (non représentées) semblables aux franges d'interférence Fi montrées aux figures 1 et 2.

Ainsi chacun des miroirs holographiques Mh1, Mh2 peut être réalisé pour que, sous l'effet de l'éclairement par le faisceau primaire FP, il réfléchisse un faisceau monochrome FB, FR de couleur différente de celle du faisceau réfléchi par l'autre miroir : par exemple de couleur bleue pour le premier faisceau FB monochrome issus du premier miroir holographique Mh1, et de couleur rouge pour le second faisceau FR issu du second miroir holographique Mh2.

Dans l'exemple non limitatif décrit, les hologrammes définissant les miroirs Mh1, Mh2 ont été enregistrés de façon que les deux faisceaux monochromes FB, FR soient réfléchis dans des directions opposées, situées sur un même axe -Y +Y perpendiculaire à l'axe de propagation X du faisceau primaire FP; ceci pour une inclinaison symétrique de ces miroirs par rapport à l'axe -Y +Y, suivant un angle d'inclinaison b1, b2 ;

l'axe -Y +Y est partagé par l'axe X en une partie +Y et une partie -Y qui représentent respectivement l'axe de propagation du faisceau monochrome bleu FB et l'axe de propagation du faisceau monochrome rouge FR.

Dans ces conditions, pour chacun des miroirs holographiques Mh1, Mh2, les franges d'indices (non représentées sur la figure 3) ont une orientation générale (symbolisée sur la figure 3 par des lignes en traits pointillés repérées OF1, OF2) telle, qu'elles sont inclinées de façon symétrique respectivement d'un angle c1,c2 de 45° par rapport aux axes de propagation -Y, +Y des faisceaux monochromes : plus précisément pour le premier miroir holographique Mh1, ses franges d'indice sont bissectrices de +Y et +X, (+ X étant une partie de l'axe de propagation X située à l'opposé de la face d'entrée FE par rapport aux axes de propagation +Y, -Y des faisceaux monochromes FB, FR) ; pour le second miroir holographique Mh2, ses franges d'indice sont bissectrices de -Y et +X.

Si l'angle b1, b2 suivant lequel sont inclinés les miroirs holographiques Mh1, Mh2 est différent de l'angle c1, c2 d'orientation de leurs franges d'indice, on réalise une anamorphose.

Ainsi par exemple, en supposant que le faisceau primaire FP ait une section circulaire dont le diamètre D1 correspond à la diagonale de la face d'entrée FE du parallélépipède p, cette dernière étant carrée, on peut prélever ainsi le maximum de l'énergie lumineuse du faisceau primaire FP. Et si d'autre part les miroirs holographiques Mh1, Mh2 fonctionnent comme ci-dessus expliqué pour des angles d'inclinaison b1, b2 de 29,36° on réalise une anamorphose de carré à rectangle au format 16/9. Une telle anamorphose permet de conserver dans chacun des faisceaux monochrome FB, FR toute l'énergie prélevée dans le faisceau primaire FP par les miroirs holographiques Mh1 et Mh2, en conférant à chacun de ces faisceaux une section rectangulaire qui dans l'exemple non limitatif décrit est au format 16/9.

En effet dans cette configuration, la section de chaque faisceau monochrome FB, FR est rectangulaire, avec dans un plan perpendiculaire à celui de la figure, une même dimension que la longueur L1 d'un côté de la face d'entrée FE, et parallèlement à la figure une dimension plus faible qui correspond à l'épaisseur Ep du prisme p. En fait la section des faisceaux monochromes FB, FR correspond à la forme des faces latérales FL1, FL2 opposées par lesquelles ces faisceaux sortent du prisme p.

Un autre avantage de cette configuration, dans laquelle les miroirs holographiques Mh1, Mh2 réfléchissent les faisceaux monochromes FB, FR suivant des directions à 90° de la direction du faisceau primaire FP incident, sans être eux-mêmes orientés à 45°, est que l'on réduit l'encombrement présenté par les miroirs Mh1, Mh2 parallèlement à l'épaisseur Ep du prisme p.

Dans la configuration présentée à la figure 3, si la lumière du faisceau primaire FP n'a aucune direction de polarisation particulière, les faisceaux monochromes FB, FR acquièrent une même direction de polarisation P1, perpendiculaire aux plans d'incidence, et qui est représentée sur la figure 3 perpendiculairement au plan de la figure. En effet, d'une part l'angle c1,c2 d'incidence des rayons du faisceau primaire FP sur les franges d'indice des miroirs holographiques Mh1, Mh2 étant de 45°, et d'autre part l'indice de réfraction moyen de chaque réseau de franges étant égal à l'indice du verre, les réflexions sont polarisantes.

Les miroirs holographiques ayant des bandes passantes spectrales déterminées, on calcule celles-ci de manière à ce que le second miroir Mh2 réfléchisse une composante rouge à 90° dans la direction -Y, et que premier Mh1 réfléchisse une composante bleue à 90° dans la direction +Y. Ces composantes sont polarisées perpendiculairement aux plans d'incidence. Les composantes rouge et bleue complémentaires, c'est-à-dire dont les directions de polarisation P2 sont parallèles au plan d'incidence (et donc représentées sur la figure 3 parallèlement à cette dernière) traversent le parallélépipède p suivant l'axe X, sans être affectées. De même, la lumière appartenant à la bande spectrale dans laquelle les miroirs Mh1 et Mh2 ne sont pas sensibles, traverse le parallélépipède p sans être affectée, et émerge de ce dernier par la seconde face carrée ou face de sortie FS opposée à la face d'entrée FE.

Un séparateur chromatique conforme à l'invention, comportant deux miroirs holographiques imbriqués comme montré à la figure 3, peut s'appliquer à tous dispositifs d'illumination utilisant au moins deux faisceaux monochromes obtenus à partir d'une lumière blanche.

Bien entendu, le fonctionnement ci-dessus décrit s'applique quelle que soit la couleur des faisceaux monochromes réfléchis par les deux miroirs holographiques imbriqués, si ces deux faisceaux ont des couleurs différentes.

En outre, pour réaliser, en plus des deux faisceaux monochromes FB, FR, un ou plusieurs autres faisceaux, il suffit de traiter la lumière qui sort du prisme p par la face de sortie FS de ce dernier, et d'en sélectionner les composantes recherchées.

La séparation des couleurs et/ou l'anamorphose peuvent être réalisées par le séparateur chromatique SC de l'invention, indépendamment de la sélection de la direction de polarisation, c'est-à-dire que le séparateur SC de l'invention peut être éclairé par un rayonnement déjà polarisé, de préférence suivant la direction de polarisation P1. L'invention peut donc être associée à tout système de polarisation du rayonnement, du type notamment qui sépare les deux composantes orthogonales de polarisation et fait tourner l'une d'elle à 90°, comme décrit par exemple dans la demande de brevet FR-A-2 669 127.

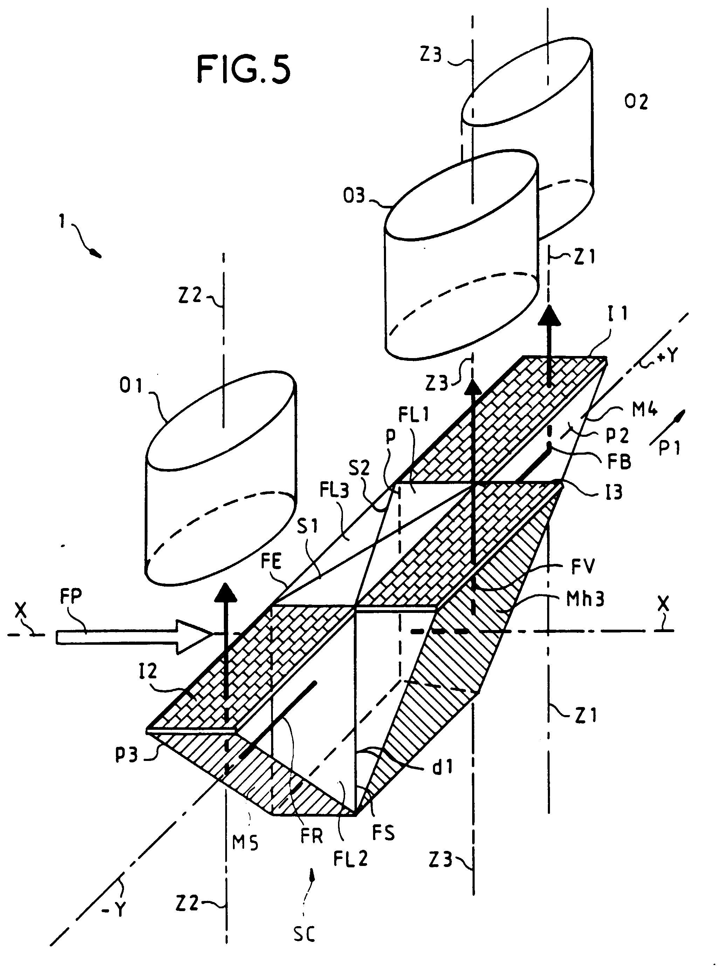

La figure 5 est une vue en perspective montrant de façon schématique un projecteur d'image 1 à trois couleurs primaires, utilisant un séparateur chromatique SC conforme à l'invention, afin d'illuminer trois imageurs rectangulaires I1, I2, I3 qui sont placés dans un même plan.

Le séparateur chromatique SC est constitué comme dans l'exemple de la figure 3, à l'aide du prisme ou parallélépipède p dans lequel sont imbriqués le premier et le second miroirs holographiques Mh1, Mh2.

La face d'entrée FE du séparateur SC est éclairée par le faisceau de lumière blanche ou faisceau primaire FP (symbolisé par une flèche en trait épais), se propageant suivant l'axe X. Le premier et le second miroirs holographiques Mh1, Mh2 réfléchissent respectivement le premier et le second faisceaux monochromes FB, FR qui sortent du parallélépipède p respectivement par la première et la seconde faces latérales FL1, FL2 et suivant les axes de propagation +Y, -Y, ces deux faisceaux FB, FR ayant une même direction de polarisation P1, comme déjà expliqué en référence à la figure 3.

La lumière qui sort du parallélépipède p par la face de sortie FS, contient entre autre la composante primaire verte dont la sélection est obtenue par une réflexion à 90°, sur un troisième miroir holographique Mh3. Ce miroir Mh3 réfléchit un troisième faisceau monochrome RV dont la longueur d'onde correspond au vert, suivant un axe de propagation Z3 qui dans l'exemple de la figure 5 est vertical.

Les premier, second et troisième faisceaux monochromes FB, FR, FV correspondent respectivement à la couleur bleue, rouge et verte, ils sont destinés à être modulés respectivement par le premier, le second et le troisième imageurs I1, I2, I3. Chaque imageur I1 à I3 est un écran capable de moduler spatialement la lumière, d'une manière en elle-même classique. Dans l'exemple non limitatif décrit, ces imageurs I1, I2, I3 sont des écrans matriciels à cristaux liquides dont le format est le même que celui des faces latérales FL1, FL2, FL3, à savoir rectangulaire dans l'exemple, notamment au format 16/9.

Dans l'exemple non limitatif décrit, les trois imageurs I1, I2, I3 sont situés dans un même plan (ou dans un plan parallèle et proche) que celui qui contient la troisième face latérale FL3 du parallélépipède p ; cette troisième face latérale est celle qui, dans le haut du parallélépipède p, relie la première et la seconde face latérale FL1, FL2 par lesquelles sortent respectivement le premier et le second faisceaux monochromes FB, FR.

Le troisième miroir holographique Mh3 sensible à la composante verte, réfléchit cette composante sur l'axe Z3, sous la forme du troisième faisceau monochrome FV orienté vers le haut de la figure, à 90° par rapport à l'axe X de propagation du faisceau primaire FP. A cet effet, le troisième miroir holographique Mh3 peut être réalisé pour être incliné, par rapport à la face de sortie FS du parallélépipède, d'un angle d1 de même valeur que l'angle d'inclinaison b1, b2 (montré figure 3), afin d'une part de limiter l'encombrement, et d'autre part de réaliser l'anomorphose carré ---> rectangle : le carré correspond à la face de sortie FS, et le rectangle correspond à la forme des imageurs I1 à I3, plus précisément au troisième imageur I3 qui est interposé sur le trajet du troisième faisceau monochrome FV.

En ce qui concerne les deux imageurs I1, I2 destinés à moduler respectivement le premier et le second faisceaux monochromes FB, FR, ils sont disposés de chaque côté et au plus près de la troisième face latérale FL3 du prisme p, de telle sorte qu'ils la prolongent, c'est-à-dire que leur longueur s'ajoutent à celle de la troisième face latérale ; alors qu'un troisième côté (correspondant à la longueur) de cette troisième face latérale est bordé par le troisième imageur I3.

Le premier et le second faisceaux monochromes FB (bleu) et FR (rouge) sont réfléchis à 90° par rapport à leur axe de propagation +Y, -Y, en direction respectivement du premier et du second imageur I1, I2, à l'aide respectivement d'un quatrième et d'un cinquième miroir M4, M5.

Ces quatrième et cinquième miroirs peuvent être aussi bien des miroirs ordinaires que des miroirs holographiques, car il n'y a pas à réaliser d'anamorphose ni de sélection de composante, ces fonctions ayant été opérées par le premier et le second miroirs holographiques Mh1, Mh2.

Après réflexion sur les miroirs M4, M5, le premier et le second faisceaux monochromes FB, FR se propagent en direction des imageurs I1, I2, suivant des axes Z1, Z2 parallèles à l'axe Z3 suivant lequel le troisième faisceau monochrome FV se propage en direction du troisième imageur I3.

Chacun des faisceaux monochromes FB, FR, FV passe par un imageur I1, I2, I3 par lequel il est éventuellement modulé afin d'être dans ce cas porteur d'une image, et dont il émerge pour se propager en direction d'un objectif de projection O1, O2, O3 en lui-même classique. Chaque objectif de projection O1, O2, O3 est ainsi affecté à un unique faisceau monochrome FB, FR, FV, qu'il focalise de façon classique sur un écran de projection (non représenté) commun aux trois faisceaux monochromes modulés.

Bien entendu les imageurs I1, I2, I3 pourraient être disposés de façons différentes : par exemple le premier et le second imageurs I1, I2 pourraient être directement placés sur les faces latérales FL1, FL2 par lesquelles respectivement le premier et le second faisceaux monochromes FB, FR sortent du prisme ou parallélépipède p. Mais il est avantageux de disposer ces imageurs ou écrans LCD I1, I2, I3 dans un plan qui contient la troisième face latérale FL3, afin d'une part d'avoir une distance égale entre chaque imageur I1, I2, I3 et l'objectif de projection O1, O2, O3 auquel il est associé ; et d'autre part pour que cette distance entre imageur et objectif soit la plus courte possible.

Afin de limiter le nombre des interfaces (air-matériau transparent) qui sont causes de pertes de lumière par réflexion, il est intéressant de concevoir une structure monobloc :

- les quatrième et cinquième miroirs M4, M5 peuvent être réalisés chacun en métallisant une face d'un prisme supplémentaire p2, p3 à 45° (pour éviter toute confusion, le premier prisme formé par le parallélépipède p est appelé "prisme principal" dans la suite de la description). Les prismes supplémentaires p2, p3 sont disposés l'un au contact de la première face latérale FL1, et l'autre au contact de la seconde face latérale FL2.

- le troisième miroir holographique Mh3 peut être constitué par un troisième prisme supplémentaire p4 en matériau transparent dont une face, inclinée d'un angle d1 par rapport à la face de sortie FS du premier prisme p, porte une couche de matériau photosensible (non représenté) dans laquelle est enregistrée l'hologramme formant le troisième miroir holographique Mh3.

Il y a ainsi continuité de l'indice de réfraction entre la face d'entrée FE du premier prisme p et l'emplacement de chaque imageur ou écran LCD I1, I2, I3. En raison de cette continuité d'indice, la réflexion sur le troisième miroir holographique Mh3 est polarisante : en effet seule la composante verte polarisée perpendiculairement par rapport au plan d'incidence sur le troisième miroir Mh3, est réfléchie par ce dernier pour constituer le troisième faisceau monochrome FV.

Les trois faisceaux monochromes FB, FR, FV sont ainsi constitués par des composantes respectivement bleue, rouge et verte polarisées suivant une même direction P1 parallèle à l'axe de propagation +Y.

Les écrans de modulation spatiale ou imageurs du type LCD comportent en général deux polariseurs (non représentés) : le premier polariseur situé du côté de leur face d'illumination F1, filtre la lumière pour ne laisser passer que celle ayant une première direction de polarisation donnée ; et le second polariseur, situé du côté de la face de visualisation, opposée à la face d'illumination, visualise les rotations de direction de polarisation engendrée par la modulation de l'écran LCD.

Dans le projecteur suivant l'invention, les trois composantes bleue, rouge et verte (formant respectivement les faisceaux monochromes FB, FR, FV) d'illumination des écrans ou imageurs LCD I1, I2, I3 étant polarisées, le premier des polariseurs ci-dessus cités de chaque écran LCD peut donc éventuellement être supprimé. Ceci est un avantage car les polariseurs usuels sont en général une cause d'échauffement du LCD, du fait qu'ils fonctionnent sur le principe de l'absorption du rayonnement indésirable. Si l'on veut cependant conserver ces premiers polariseurs dans un projecteur suivant l'invention, afin par exemple d'augmenter le contraste d'image, le problème de l'échauffement est bien moindre puisque le rayonnement incident sur ces premiers polariseurs est déjà polarisé.

Dans le cas où la direction de polarisation conférée aux faisceaux monochromes FB, FR, FV ne serait pas optimale quant aux performances des imageurs ou écran LCD I1, I2, I3, on peut disposer sur le trajet de ces faisceaux, par exemple juste avant l'écran LCD contre la face d'illumination F1 de ce dernier, une lame retardatrice λ/2 en elle-même classique, particulièrement adaptée à la couleur du faisceau monochrome FB, FR, FV modulée par cet écran LCD (une feuille de matière plastique biréfringente par exemple). Ainsi, la direction de polarisation des faisceaux monochromes ou faisceaux d'illumination FB, FR, FV peut être tournée pour être dans une direction particulièrement favorable au fonctionnement des écrans LCD I1, I2, I3.

Il est à noter que les chemins optiques compris entre la face d'entrée FE et les imageurs I1, I2, I3, ne sont pas rigoureusement égaux entre eux, et il peut être nécessaire d'introduire sur le trajet d'une ou de plusieurs composantes, une lentille qui, de façon en elle-même classique, aide à concentrer la lumière dans l'ouverture rectangulaire de l'imageur.

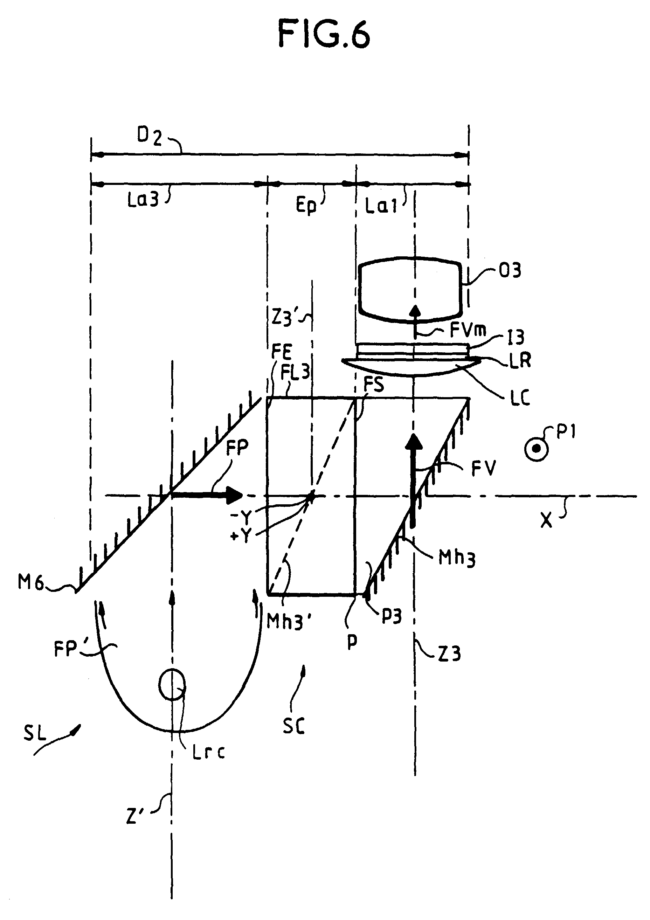

la figure 6 est une vue schématique d'un projecteur d'image 1 suivant l'invention, dont elle illustre la compacité. La figure 6 correspond à une vue du projecteur de la figure 5 suivant une coupe parallèle aux première et seconde faces latérales FL1, FL2 du prisme principal p, le plan de cette coupe passant par la ligne d'intersection des deux miroirs holographiques Mh1, Mh2 imbriqués. En conséquence, par rapport à la figure 5, sur la figure 6 on ne voit pas notamment le premier et le second imageurs I1, I2 (bleu et rouge) qui sont respectivement dans un plan plus profond et dans un plan moins profond que celui de la figure 5.

Le prisme principal p ou parallélépipède apparaît sous la forme d'un rectangle qui correspond à une première ou une seconde face latérale FL1, FL2, alors que les faces d'entrée et de sortie FE, FS s'étendent perpendiculairement au plan de la figure.

La face d'entrée FE est éclairée par le faisceau de lumière blanche ou faisceau primaire FP. Le faisceau primaire FP résulte d'une émission de lumière par une source de lumière SL, constituée par exemple par une lampe à arc Lrc disposée au foyer d'un réflecteur parabolique RP. La lumière émise par la source SL forme un faisceau de lumière blanche FP' se propageant en direction d'un sixième miroir M6, suivant un axe de propagation Z' parallèle aux faces d'entrée et de sortie FE, FS du prisme principal p.

Le sixième miroir M6 peut être un miroir du type "miroir froid" : d'une part il réfléchit à 90° suivant l'axe de propagation X, la partie utile du spectre c'est-à-dire la lumière visible formant le faisceau primaire FP ; d'autre part, par transmission suivant l'axe Z', il élimine les rayonnements infrarouges et ultra-violet.

Le faisceau primaire FP rencontre le séparateur chromatique SC comprenant le prisme principal p, dans lequel sont imbriqués le premier et le second miroirs holographiques Mh1, Mh2 (non représentés sur la figure 6). Les deux miroirs holographiques Mh1, Mh2 réfléchissent les premier et second faisceaux monochromes FB, FR (non représentés sur la figure 6) suivant les axes de propagation +Y, -Y perpendiculaires au plan de la figure.

Le reste de la lumière constituant le faisceau primaire FP sort ensuite du prisme principal p par la face de sortie FS de ce dernier, et pénètre dans le troisième prisme supplémentaire p3 portant le troisième miroir holographique Mh3, sensible au vert dans l'exemple.

Le troisième miroir holographique Mh3 réfléchit le troisième faisceau monochrome FV, constitué par la composante verte, polarisée suivant la direction de polarisation P1 perpendiculaire au plan de la figure comme déjà décrit en référence à la figure 5. Le troisième faisceau monochrome FV est réfléchi suivant l'axe de propagation Z3 parallèle aux faces d'entrée et sortie FE, FS, en direction du troisième imageur I3. Après son passage dans l'imageur I3, le troisième faisceau monochrome est porteur d'une image et constitue un troisième faisceau modulé FVm qui se propage sur l'axe Z3 en direction de l'objectif de projection O3.

On a représenté sur la figure 6 une lentille de champ LC disposée devant le troisième imageur I3, sur le trajet du troisième faisceau monochrome FV. La lentille de champ LC fait converger les rayons du troisième faisceau monochrome FV, FVm dans l'ouverture du troisième objectif de projection O3. Il est à noter que dans un projecteur d'images à trois imageurs du type écran LCD, généralement les trois imageurs sont associés chacun à une telle lentille de champ. En conséquence, il doit être entendu que pour l'ensemble de la description on doit comprendre, par le terme imageur ou écran LCD, un ensemble lentille de champ plus écran LCD.

En outre, on a représenté sur la figure 6 une lame retardatrice LR à λ/2, disposée entre la lentille de champ LC et le troisième imageur I3 ; il doit être considéré qu'une telle lame retardatrice est disposée également devant les autres imageurs I1, I2. Cependant la présence de cette lame retardatrice LR n'est pas toujours obligatoire, elle peut être ajoutée pour faire tourner la direction de polarisation, comme il a été précédemment expliqué, afin que cette direction de polarisation soit la plus favorable au fonctionnement d'un imageur du type écran LCD.

Avec une telle disposition, l'encombrement présenté par le projecteur 1 de l'invention est particulièrement faible suivant l'axe de propagation X du faisceau primaire FP, et c'est justement suivant cet axe que s'apprécie l'encombrement d'un rétroprojecteur complet. En effet, suivant l'axe X, l'encombrement D2 se réduit à la largeur Lal du troisième imageur I3, plus l'épaisseur Ep du prisme principal p, plus la largeur du réflecteur parabolique RP, du fait que l'encombrement des éléments utiles aux premier et second faisceaux monochromes FB, FR est à compter dans un plan perpendiculaire à-celui de la figure 6.

Un autre avantage important qui résulte d'une telle disposition, est que pour chaque voie ou couleur, la distance entre l'objectif de projection et son imageur peut être minimale, car aucun composant optique n'est disposé sur le trajet entre ces deux éléments.

Il est bien connu que les imageurs du type écran matriciel à cristaux liquides ou LCD sont caractérisés par un "angle solide d'acceptance". Si l'on veut que le contraste d'un écran LCD reste supérieur à une valeur donnée, les angles incidents des rayons qui illuminent l'écran LCD doivent être limités : ils doivent être contenus dans un angle solide donné.

Dans le cas général, cet angle solide ne présente pas de symétrie axiale ; il est allongé dans une direction particulière. Cette direction est bissectrice des directions des deux polariseurs (précédemment mentionnés) d'un écran LCD. L'étendue géométrique d'acceptance du LCD est égale au produit de sa surface, par l'angle solide d'acceptance.

Un autre avantage de l'invention, est qu'elle permet d'adapter l'angle solide des rayons d'illumination à l'angle solide d'acceptance. En effet, l'anamorphose carré ---> rectangle s'accompagne d'une déformation de l'angle solide des rayons d'illumination. Ainsi dans le cas d'un faisceau traversant une surface carrée avec un angle solide à symétrie axiale, comme dans le cas du faisceau primaire FP traversant la face d'entrée FE de forme carrée, si toute l'énergie prélevée dans ce faisceau par un miroir holographique anamorphoseur (tel que les miroirs Mh1, Mh2 ou Mh3) est amenée à traverser une surface rectangulaire (telle que les faces latérales FL1, FL2), il y a réduction de la dimension de diaphragme dans une direction. Il y a par conséquent augmentation de l'angle solide des rayons dans cette direction de sorte que l'étendue géométrique du faisceau soit conservée.

Dans les exemples montrés aux figures 5 et 6, on voit qu'il est possible d'illuminer des surfaces rectangulaires (celles des imageurs I1, I2, I3) avec une direction de polarisation parallèle à la longueur des rectangles. Par contre l'allongement de l'angle solide des rayons s'effectue dans la direction de la largeur des rectangles. Aussi pour que l'angle solide d'acceptance d'un écran LCD soit allongé dans la direction de sa largeur, il faut que le rayonnement qui l'illumine soit polarisé à 45°.

En conséquence on peut utiliser une lame retardatrice à $\lambda/2$ placée devant un imageur I1 à I3, comme la lame retardatrice LR placée devant le troisième imageur I3, afin de faire coïncider la direction de polarisation du rayonnement avec la direction de polarisation favorable à l'écran LCD, tout en adaptant l'angle solide d'illumination à l'angle solide d'acceptance de l'écran LCD. Bien entendu chaque lame retardatrice ainsi interposée devant un imageur I1, I2, I3 doit être adaptée à la couleur du faisceau monochrome ainsi traité.

Il est à remarquer que l'encombrement du projecteur d'images le long de l'axe X peut encore être réduit, au prix d'une complexité un peu plus grande dans la réalisation du premier prisme principal ou parallélépipède p. Il suffit à cet effet d'inclure le troisième miroir holographique Mh3 dans le premier prisme principal p, dans une position telle qu'il occuperait dans ce dernier un plan parallèle à celui qu'il occupe quand il est disposé à l'extérieur, ainsi que représenté à la figure 5.

Une telle réalisation est illustrée sur la figure 6 à l'aide d'une ligne en traits pointillés repérée Mh3' qui symbolise cette nouvelle position du troisième miroir holographique Mh3. Bien entendu, dans une telle configuration, l'ensemble constitué par la lentille de champ LC, la lame retardatrice LR, le troisième imageur I3 et le troisième objectif de projection O3, serait lui aussi déplacé pour être disposé au-dessus de la troisième face latérale FL3, sur le nouvel axe Z3' de réflexion du troisième miroir holographique Mh3'. Les caractéristiques et propriétés du troisième miroir holographique Mh3, telles que décrites précédemment, restent inchangées dans la nouvelle position de ce miroir. Cette disposition nouvelle du troisième miroir holographique ne modifie pas la position des éléments utiles à traiter les deux faisceaux monochromes FB, FR.

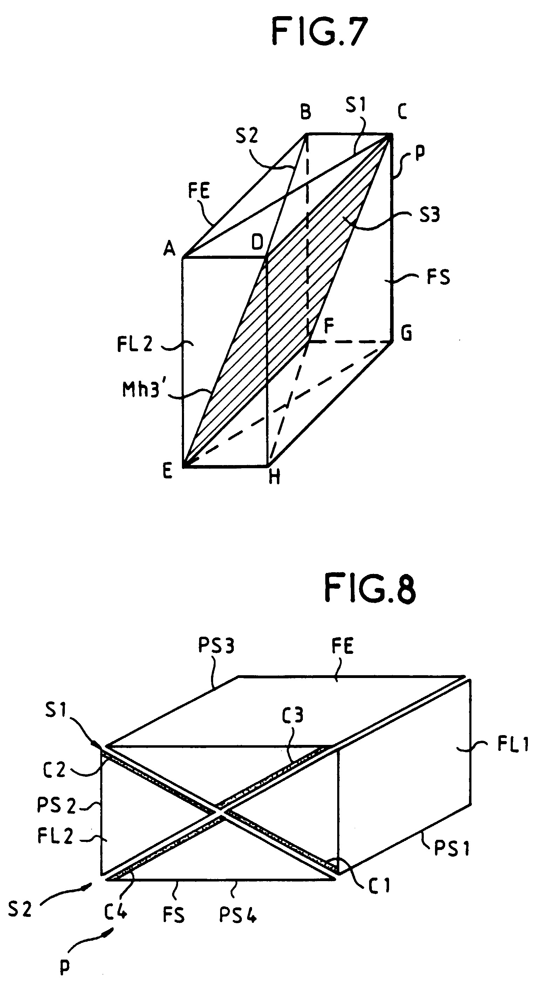

La figure 7 représente le parallélépipède ou premier prisme p, afin d'illustrer le mode de réalisation dans lequel le troisième miroir holographique Mh3' est contenu dans ce premier prisme.

On a matérialisé dans le parallélépipède p une troisième surface S3 qui représente la face "réfléchissante" du troisième miroir Mh3'. Cette troisième surface S3 est délimitée par les coins D, C, E, et F du parallélépipède p. En conséquence, dans cette situation, la troisième surface S3 est imbriquée avec les première et seconde surfaces S1, S2, c'est-à-dire que les trois miroirs holographiques Mh1, Mh2, Mh3' sont imbriqués entre eux.

Des miroirs holographiques Mh1, Mh2, Mh3 imbriqués peuvent être réalisés par exemple, en découpant le parallélépipède p suivant les différents plans des différents miroirs qu'il contient.

La figure 8 illustre à titre exemple non limitatif, le découpage du prisme principal ou parallélépipède p suivant deux plans imbriqués, conduisant à obtenir quatre prismes secondaires PS1 à PS4, en vue de réaliser le premier et le second miroirs holographiques Mh1, Mh2 imbriqués.

Des couches C1 à C4 de matériau photosensible sont déposées sur des faces intérieures de ces prismes secondaires, de manière à pouvoir reconstituer les deux surfaces diagonales S1, S2 (montrées aux figures 4a, 4b) destinées à former les premier et second miroirs holographiques Mh1 Mh2. Chaque surface diagonale S1 et S2 est formée à l'aide de deux couches C1, C2 et C3, C4 situées dans le prolongement l'une de l'autre, c'est-à-dire dans un même plan quand le parallélépipède est formé.

Dans l'exemple non limitatif décrit, chaque surface diagonale S1, S2 est obtenue par deux couches C1, C2 et C3, C4 déposées sur des faces intérieures de prismes secondaires PS1 à PS4 opposés :

-    la première surface diagonale S1 est formée à l'aide d'un premier et d'un second prismes secondaires PS1, PS2 disposés à l'opposé l'un de l'autre, et qui dans l'exemple, sont ceux dont les faces extérieures correspondent aux faces latérales FL1, FL2.

- la seconde surface diagonale S2 est formée à l'aide d'un troisième et d'un quatrième prisme secondaires PS3, PS4 disposés à l'opposé l'un de l'autre, et qui dans l'exemple sont ceux dont les faces externes correspondent aux faces d'entrée et de sortie FE, FS.

Bien entendu l'une et/ou l'autre des surfaces diagonales peuvent être obtenues de manières différentes, elles peuvent être formées par exemple à partir de couches photosensibles déposées sur des prismes secondaires adjacents.

On positionne ensuite les deux prismes secondaires formant une surface diagonale S1, S2, dans la position qui sera la leur quand ils formeront le séparateur chromatique SC, et on les expose aux interférences produites par deux faisceaux pour enregistrer l'hologramme correspondant à un miroir holographique Mh1, Mh2.

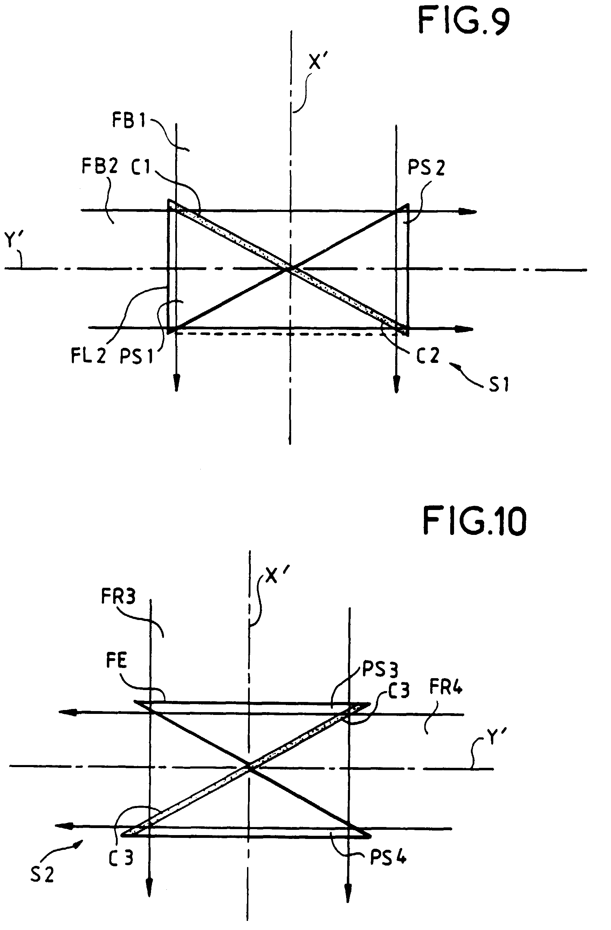

La figure 9 montre de façon schématique, le premier et le second prismes secondaires PS1, PS2 exposés à deux faisceaux FB1, FB2, d'enregistrement en vue de réaliser le premier miroir holographique Mh1.

Dans l'exemple, ce premier miroir Mh1 étant sensible au bleu, les deux faisceaux d'enregistrement FB1, FB2 sont issus d'une même source laser (non représentée) émettant dans le bleu.

Le premier faisceau d'enregistrement FB1 se propage en direction des deux prismes secondaires PS1, PS2 suivant un axe X'. Les deux prismes secondaires PS1, PS2 sont disposés de façon que la première surface diagonale S1 (formée par les couches C1, C2), soit orientée par rapport à l'axe X' comme est orienté le premier miroir holographique Mh1 par rapport à l'axe X de propagation du faisceau primaire FP (voir figure 3).

Le second faisceau d'enregistrement FB2 se propage en direction des deux prismes secondaires PS1, PS2 suivant un axe de propagation Y' perpendiculaire à l'axe X'. Ce second faisceau d'enregistrement est incident sur le premier prisme secondaire PS1, sur une face extérieure de ce dernier formant la seconde face latérale FL2. On enregistre ainsi l'hologramme correspondant au premier miroir holographique Mh1 suivant les principes déjà expliqués dans le préambule.

La figure 10 montre de façon schématique, le troisième et le quatrième prisme secondaires PS3, PS4 exposés à un troisième et un quatrième faisceaux d'enregistrement FR3, FR4, en vue de réaliser le second miroir holographique Mh2. Ces deux faisceaux d'enregistrement sont émis par une même source laser (non représentée), de couleur rouge dans l'exemple.

Le troisième faisceau d'enregistrement FR3 se propage en direction des deux prismes secondaires PS3, PS4 suivant un même axe de propagation X' que celui montré à la figure 9. Ces deux prismes PS3, PS4 sont disposés de façon que la seconde surface diagonale S2 (formée par les troisième et quatrième couches C3, C4), soit orientée par rapport à l'axe X' comme est orienté le second miroir Mh2 par rapport à l'axe X de propagation du faisceau primaire FP. En conséquence le troisième faisceau d'enregistrement FR3 est incident sur une face extérieure du troisième prisme secondaire PS3, face extérieure qui correspond à la face d'entrée FE du parallélépipède p.

Le quatrième faisceau d'enregistrement FR4 se propage en direction des deux prismes secondaires PS3, PS4 suivant un axe Y' de propagation perpendiculaire à l'axe X' du troisième faisceau d'enregistrement FR3. En fait; le quatrième faisceau d'enregistrement FR4 se propage sur un même axe que le second faisceau d'enregistrement FB2 (montré à la figure 9) mais en sens contraire de ce dernier.

On enregistre ainsi l'hologramme correspondant au second miroir holographique Mh2, suivant les principes en eux-même connus déjà expliqués dans le préambule.

Une fois les miroirs holographiques Mh1, Mh2 enregistrés, on assemble les quatre prismes secondaires PS1 à PS4 pour reconstituer le prisme principal ou parallélépipède. Au besoin, on utilise pour cet assemblage un matériau d'adaptation d'indice entre deux prismes. Le parallélépipède p étant reconstitué il constitue un séparateur chromatique SC pour deux couleurs. A ce séparateur chromatique de base peut être ajouté éventuellement un prisme supplémentaire p3 portant le troisième miroir holographique Mh3, afin de séparer une troisième composante, comme illustré aux figures 5 et 6.

Ce séparateur chromatique SC peut en outre être complété comme montré aux figures 5 et 6 pour renvoyer chaque composante vers un écran modulateur spatial ou imageur.

On note qu'il est possible aussi d'enregistrer les hologrammes sur un support souple, en matière plastique notamment. Après fixation des hologrammes par un procédé classique en photographie, ceux-ci peuvent être transférés (adhérés) sur la face d'un prisme de verre par exemple.

Une autre méthode peut consister à utiliser des matériaux photosensibles qui ne sont sensibles qu'à certains domaines spectraux. On connaît des photopolymères qui ne sont sensibles que dans le rouge, d'autres qui ne sont sensibles que dans le domaine vert-bleu. On peut donc assembler le parallélépipède p muni des couches de matériaux photosensibles différents sur chaque surface séparatrice, et exposer le parallépipède p successivement en lumière laser de différentes longueurs d'onde.

## Revendications

1. Séparateur chromatique (SC) de lumière, destiné à être éclairé par un faisceau de lumière blanche dit faisceau primaire (FP), le séparateur comportant au moins deux miroirs sélectifs (Mh1, Mh2, Mh3) en longueur d'onde réfléchissant chacun un faisceau monochrome (FB, FR) à partir de la lumière contenue dans le faisceau primaire, les faisceaux monochromes réfléchis par les deux miroirs étant de longueurs d'onde différentes, les deux miroirs étant imbriqués dans un prisme (p) de sorte que leurs plans (S1, S2) se croisent dans le prisme, le prisme possèdant au moins une face d'entrée carrée (FE) et deux faces latérales (FL1, FL2), chaque miroir étant agencé pour qu'un faisceau d'entrée perpendiculaire à la face d'entrée soit réfléchi en un faisceau monochrome perpendiculaire à une face latérale respective, caractérisé en ce que les deux miroirs sélectifs sont des miroirs holographiques, en ce que les deux faces latérales (FL1, FL2) sont rectangulaires, et en ce que l'angle (b1, b2) entre chaque miroir et l'axe de propagation (+y, -y) du faisceau monochrome correspondant est différent de la moitié (C1, C2) de l'angle formé par les axes de propagation (+x; +y, -y) du faisceau d'entrée et du faisceau monochrome correspondant, pour réaliser une anamorphose entre le faisceau d'entrée et chacun des faisceaux monochromes.

2.  Séparateur selon la revendication 1, caractérisé en ce que les faces latérales rectangulaires (FL1, FL2, FL3) du parallélépipède sont au format 16/9.

3.  Séparateur selon la revendication 1, caractérisé en ce que le prisme est un paralléllépipède rectangle ayant, outre sa face d'entrée carrée et ses faces latérales rectangulaires, une face de sortie (FS) carrée opposée à la face d'entrée.

4.  Séparateur selon la revendication 3, caractérisé en ce qu'il comporte un troisième miroir holographique (Mh3) disposé après la face de sortie (FS) du parallélépipède par rapport au sens de propagation du faisceau primaire (FP), ledit miroir holographique (Mh3) produisant un troisième faisceau monochrome (FV).

5.  Séparateur selon l'une des revendications 1 à 4, caractérisé en ce que les miroirs holographiques sont sélectifs en direction de polarisation.

6.  Séparateur selon la revendication 5, caractérisé en ce que les faisceaux monochromes ont une même direction de polarisation (P1).

7.  Séparateur suivant l'une des revendications précédentes, caractérisé en ce qu'il comporte des moyens (Mh3, M4, M5) pour réfléchir les faisceaux monochromes (FB, FR, FV) suivant des axes de propagation (Z1, Z2, Z3) parallèles au plan de la face d'entrée (FE) du parallélépipède.

8.  Séparateur suivant les revendications 3 et 7, caractérisé en ce qu'il comporte un premier, second et troisième prismes supplémentaires (p1, p2, p3) portant respectivement un quatrième, un cinquième miroirs (M4, M5) et le troisième miroir holographique (Mh3), le troisième prisme supplémentaire (p3) étant appliqué sur la face de sortie (FS) du parallélépipède (p), et le premier et le second prismes supplémentaires (p1, p2) étant appliqués sur des faces latérales (FL1, FL2) opposées dudit parallélépipède (p).

9.  Séparateur suivant l'une des revendications 1 à 8, caractérisé en ce que le parallélépipède (p) est formé par l'assemblage des prismes secondaires (PS1, PS4) résultant d'une découpe du parallélépipède (p) suivant les différents plans (S1, S2) des différents miroirs holographiques (Mh1, Mh2) imbriqués.

10. Projecteur d'images comportant une source (SL) de lumière visible (FP) et au moins deux imageurs (I1, I2, I3) modulant spatialement des faisceaux monochromes (FB, FR, FV) de longueur d'onde différentes, caractérisé en ce qu'il comporte en outre un séparateur chromatique de lumière (SC) suivant l'une quelconque des revendications 1 à 9.

11. Projecteur suivant la revendication 10, caractérisé en ce qu'il comporte trois imageurs (I1, I2, I3).

12. Projecteur suivant l'une des revendications 10 et 11, caractérisé en ce que les imageurs (I1, I2, I3) ont une forme rectangulaire.

13. Projecteur suivant l'une des revendications 10 à 12, caractérisé en ce que les imageurs (I1, I2, I3) sont disposés suivant des plans perpendiculaires à celui de la face d'entrée (FE) du séparateur chromatique (SC).

14. Projecteur suivant la revendication 13, caractérisé en ce que les imageurs (I1, I2, I3) sont disposés sensiblement dans un même plan.

15. Projecteur selon la revendication 14, caractérisé en ce que les imageurs (I1, I2, I3) sont situés sensiblement dans un même plan qu'une troisième face latérale (FL3) du séparateur chromatique (SC), cette troisième face latérale (FL3) reliant les deux faces latérales (FL1, FL2) opposées par lesquelles sortent du parallélépipède (p) les deux faisceaux monochromes (FB, FR).

16. Projecteur suivant la revendication 15, caractérisé en ce que la longueur des imageurs (I1, I2, I3) est parallèle à la longueur de la troisième face latérale (FL3).

17. Projecteur suivant la revendication 16, caractérisé en ce que deux imageurs (I1, I2) sont disposés dans le prolongement de la longueur de la troisième face latérale (FL3), de part et d'autre de cette dernière.

18. Projecteur suivant la revendication 17, caractérise en ce qu'un troisième imageur (13) est disposé sur le côté de la troisième face latérale (FL3) de façon que sa largeur s'ajoute à celle de cette troisième face latérale.

19. Projecteur suivant l'une des revendications 10 à 18, caractérisé en ce qu'il comporte en outre un objectif de projection (O1, O2, O3) par faisceau monochrome.

20. Projecteur suivant la revendication 19, caractérisé en ce que les objectifs de projection (O1, O2, O3) sont disposés sur un même axe de propagation (Z1, Z2, Z3) de faisceau monochrome que l'imageur (I1 à I3) auquel ils sont associés.

21. Projecteur suivant l'une quelconque des revendications 10 à 20, caractérisé en ce qu'une lentille de champ (LC) est interposée sur le trajet d'au moins un faisceau monochrome (FB, FR, FV) en amont de l'imageur (I1, I2, I3) par rapport au sens de propagation du faisceau.

22. Projecteur suivant l'une quelconque des revendications 10 à 21, caractérisé en ce qu'au moins une lame retardatrice (LR) est disposée sur le trajet d'au moins un faisceau monochrome (FB, FR, FV) en amont de l'imageur (I1, I2, I3) suivant le sens de propagation du faisceau.

23. Projecteur suivant l'une quelconque des revendications 10 à 22, caractérisé en ce que les imageurs (I1, I2, I3) sont des écrans matriciels à cristaux liquides.

24. Projecteur suivant l'une quelconque des revendications 10 à 23, caractérisé en ce que ledit projecteur d'image est du type "rétroprojecteur".


**Patentansprüche**

1. Chromatischer Lichtseparator (SC), der von einem Strahl weißen Lichts, Primärstrahl (FP) genannt, beleuchtet werden soll und mindestens zwei wellenlängenselektive Spiegel (Mh1, Mh2, Mh3) besitzt, die je einen aus dem im Primärstrahl enthaltenen Licht gebildeten monochromen Lichtstrahl (FB, FR) reflektieren, wobei die monochromen Lichtstrahlen, die von den beiden Spiegeln reflektiert werden, unterschiedliche Wellenlängen besitzen und die beiden Spiegel in einem Prisma (p) ineinander so verschachtelt sind, daß ihre Ebenen (S1, S2) sich in dem Prisma kreuzen, wobei das Prisma mindestens eine quadratische Eingangsseite (FE) und zwei Seitenflächen (FL1, FL2) besitzt und jeder Spiegel so angeordnet ist, daß ein Eingangsstrahl, der senkrecht auf die Eingangsseite auftrifft, als monochromer Strahl senkrecht zu je einer der Seitenflächen reflektiert austritt, dadurch gekennzeichnet, daß die beiden wellenlängenselektiven Spiegel holographische Spiegel sind, daß die beiden Seitenflächen (FL1, FL2) rechtwinklig sind und daß der Winkel (bl, b2) zwischen jedem Spiegel und der Ausbreitungsachse (+Y; -Y) des entsprechenden monochromen Strahls sich von der Hälfte (c1, c2) des Winkels unterscheidet, der zwischen den Ausbreitungsachsen (+X; +Y, -Y) des Eingangsstrahls und des entsprechenden monochromen Strahls gebildet wird, so daß sich eine Anamorphose zwischen dem Eingangsstrahl und jedem der monochromen Strahlen ergibt.

2. Separator nach Anspruch 1, dadurch gekennzeichnet, daß die rechtwinkligen Seitenflächen (FL1, FL2, FL3) des Parallelepipeds das Format 16/9 besitzen.

3. Separator nach Anspruch 1, dadurch gekennzeichnet, daß das Prisma ein rechtwinkliges Parallelepiped ist, das außer seiner quadratischen Eingangsseite und seinen rechtwinkligen Seitenflächen eine quadratische Ausgangsseite (FS) besitzt, der der Eingangsseite gegenüberliegt.

4. Separator nach Anspruch 3, dadurch gekennzeichnet, daß er einen dritten holographischen Spiegel (Mh3) enthält, der hinter der Ausgangsseite (FS) des Parallelepipeds in Richtung der Ausbreitung des Primärstrahls (FP) liegt, wobei dieser holographische Spiegel (Mh3) einen dritten monochromen Strahl (FV) erzeugt.

5. Separator nach einem der Ansprüche 1 bis 4, dadurch gekennzeichnet, daß die holographischen Spiegel hinsichtlich der Polarisationsrichtung selektiv sind.

6. Separator nach Anspruch 5, dadurch gekennzeichnet, daß die monochromen Strahlen eine gleiche Polarisationsrichtung (P1) besitzen.

7. Separator nach einem der vorhergehenden Ansprüche, dadurch gekennzeichnet, daß er Mittel (Mh3, M4, M5) aufweist, um die monochromen Strahlen (FB, FR, FV) gemäß zur Eingangsseite (FE) des Parallelepipeds parallelen Ausbreitungsachsen (Z1, Z2, Z3) abzulenken.

8. Separator nach den Ansprüchen 3 und 7, dadurch gekennzeichnet, daß er ein erstes, ein zweites und ein drittes zusätzliches Prisma (pl, p2, p3) mit einem vierten bzw. fünften Spiegel (M4, M5) bzw. dem dritten holographischen Spiegel (Mh3) enthält, wobei das dritte zusätzliche Prisma (p3) an die Ausgangsseite (FS) des Parallelepipeds (p) anschließt, während das erste und das zweite zusätzliche Prisma (pl, p2) an die einander gegenüberliegenden Seitenflächen (FL1, FL2) des Parallelepipeds (p) anschließen.

9. Separator nach einem der Ansprüche 1 bis 8, dadurch gekennzeichnet, daß das Parallelepiped (p) durch Zusammenfügung der Sekundärprismen (PS1 .. PS4) gebildet ist, die aus dem Zerschneiden des Parallelepipeds (p) entlang der verschiedenen Ebenen (S1, S2) der verschiedenen ineinander verschachtelten holographischen Spiegel (Mhl, Mh2) resultieren.

10. Bildprojektor mit einer Quelle (SL) sichtbaren Lichts (FP) und mindestens zwei Bildformern (I1, I2, I3), die monochrome Lichtstrahlen (FB, FR, FV) unterschiedlicher Wellenlängen räumlich modulieren, dadurch gekennzeichnet, daß er außerdem einen chromatischen Lichtseparator (SC) gemäß einem beliebigen der Ansprüche 1 bis 9 enthält.

11. Projektor nach Anspruch 10, dadurch gekennzeichnet, daß er drei Bildformer (I1, I2, I3) enthält.

12. Projektor nach einem der Ansprüche 10 und 11, dadurch gekennzeichnet, daß die Bildformer (I1, I2, I3) Rechteckform besitzen.

13. Projektor nach einem der Ansprüche 10 bis 12, dadurch gekennzeichnet, daß die Bildformer (I1, I2, I3) in Ebenen senkrecht zu der der Eingangsseite (FE) des chromatischen Separators (SC) angeordnet sind.

14. Projektor nach Anspruch 13, dadurch gekennzeichnet, daß die Bildformer (I1, I2, I3) im wesentlichen in einer gemeinsamen Ebene liegen.

15. Projektor nach Anspruch 14, dadurch gekennzeichnet, daß die Bildformer (I1, I2, I3) im wesentlichen in einer gleichen Ebene wie eine dritte Seitenfläche (FL3) des chromatischen Separators (SC) liegen, die die beiden einander gegenüberliegenden Seitenflächen (FL1, FL2) verbindet, über die die beiden monochromen Strahlen (FB, FR) aus dem Parallelepiped (p) austreten.

16. Projektor nach Anspruch 15, dadurch gekennzeichnet, daß die Länge der Bildformer (I1, I2, I3) parallel zur Länge der dritten Seitenfläche (FL3) verläuft.

17. Projektor nach Anspruch 16, dadurch gekennzeichnet, daß zwei Bildformer (I1, I2) in der Verlängerung der Länge der dritten Seitenfläche (FL3) zu beiden Seiten dieser Fläche liegen.

18. Projektor nach Anspruch 17, dadurch gekennzeichnet, daß ein dritter Bildformer (I3) am Rand der dritten Seitenfläche (FL3) liegt, so daß seine Breite zu der der dritten Seitenfläche hinzuzuaddieren ist.

19. Projektor nach einem der Ansprüche 10 bis 18, dadurch gekennzeichnet, daß er außerdem ein Projektionsobjektiv (O1, O2, O3) für jeden monochromen Strahl besitzt.

20. Projektor nach Anspruch 19, dadurch gekennzeichnet, daß die Projektionsobjektive (01, 02, 03) jeweils auf derselben Ausbreitungsachse (Z1, Z2, Z3) des monochromen Strahls wie der Bildformer (I1, I2, I3) liegen, dem sie zugeordnet sind.

21. Projektor nach einem beliebigen der Ansprüche 10 bis 20, dadurch gekennzeichnet, daß eine Feldlinse (LC) im Lichtverlauf mindestens eines monochromen Stahls (FB, FR, FV) bezüglich der Ausbreitungsrichtung des Strahls vor dem Bildformer (I1, I2, I3) eingefügt ist.

22. Projektor nach einem beliebigen der Ansprüche 10 bis 21, dadurch gekennzeichnet, daß mindestens ein Verzögerungsplättchen (LR) im Verlauf mindestens eines monochromen Strahls (FB, FR, FV) in Richtung der Ausbreitung des Strahls vor dem Bildformer (I1, I2, I3) angeordnet ist.

23. Projektor nach einem beliebigen der Ansprüche 10 bis 22, dadurch gekennzeichnet, daß die Bildformer (I1, I2, I3) matrixartige Flüssigkristallschirme sind.

24. Projektor nach einem beliebigen der Ansprüche 10 bis 23, dadurch gekennzeichnet, daß der Bildprojektor ein Retroprojektor ist.

**Claims**

1. Chromatic light separator (CS), intended to be illuminated by a white light beam referred to as the primary beam (PB), the separator including at least two wavelength-selective mirrors (Mh1, Mh2, Mh3) each reflecting a monochrome beam (BB, RB) on the basis of the light contained in the primary beam, the monochrome beams reflected by the two mirrors being of different wavelengths, the two mirrors being nested within a prism (p) so that their planes (S1, S2) cross within the prism, the prism possessing at least one square entry face (EF) and two lateral faces (LF1, LF2), each mirror being arranged so that an entry beam perpendicular to the entry face is reflected as a monochrome beam perpendicular to a respective lateral face, characterized in that the two selective mirrors are holographic mirrors, in that the two lateral faces (LF1, LF2) are rectangular, and in that the angle (bl, b2) between each mirror and the axis of propagation (+Y; -Y) of the corresponding monochrome beam is different from half (C1, C2) the angle formed by the axes of propagation (+X; +Y, -Y) of the entry beam and of the corresponding monochrome beam, so as to produce an anamorphosis between the entry beam and each of the monochrome beams.

2. Separator according to Claim 1, characterized in that the rectangular lateral faces (LF1, LF2, LF3) of the parallelepiped are in the 16/9 format.

3. Separator according to Claim 1, characterized in that the prism is a right-angle parallelepiped having, in addition to its square entry face and its rectangular lateral faces, a square exit face (XF) opposite the entry face.

4. Separator according to Claim 3, characterized in that it includes a third holographic mirror (Mh3) placed after the exit face (XF) of the parallelepiped with respect to the direction of propagation of the primary beam (PB), the said holographic mirror (Mh3) producing a third monochrome beam (GB).

5. Separator according to one of Claims 1 to 4, characterized in that the holographic mirrors are selective in terms of direction of polarization.

6. Separator according to Claim 5, characterized in that the monochrome beams have the same direction of polarization (P1).

7. Separator according to one of the preceding claims, characterized in that it includes means (Mh3, M4, M5) for reflecting the monochrome beams (BB, RB, GB) along axes of propagation (Z1, Z2, Z3) parallel to the plane of the entry face (EF) of the parallelepiped.

8. Separator according to Claims 3 and 7, characterized in that it includes first, second and third supplementary prisms (p1, p2, p3) respectively bearing fourth and fifth mirrors (M4, M5) and the third holographic mirror (Mh3), the third supplementary prism (p3) being applied to the exit face (XF) of the parallelepiped (p), and the first and second supplementary prisms (pl, p2) being applied to opposite lateral faces (LF1, LF2) of the said parallelepiped (p).

9. Separator according to one of Claims 1 to 8, characterized in that the parallelepiped (p) is formed by the assemblage of secondary prisms (SP1 to SP4) resulting from cutting the parallelepiped (p) along the various planes (S1, S2) of the various nested holographic mirrors (Mh1, Mh2).

10. Image projector including a source (LS) of visible light (PB) and at least two imagers (I1, I2, I3) which spatially modulate monochrome beams (BB, RB, GB) of different wavelengths, characterized in that it furthermore includes a chromatic light separator (CS) according to any one of Claims 1 to 9.

11. Projector according to Claim 10, characterized in that it includes three imagers (I1, I2, I3).

12. Projector according to one of Claims 10 and 11, characterized in that the imagers (I1, I2, I3) have a rectangular shape.

13. Projector according to one of Claims 10 to 12, characterized in that the imagers (I1, I2, I3) are placed in planes perpendicular to that of the entry face (EF) of the chromatic separator (CS).

14. Projector according to Claim 13, characterized in that the imagers (I1, I2, I3) are placed substantially in one and the same plane.

15. Projector according to Claim 14, characterized in that the imagers (I1, I2, I3) are situated substantially in the same plane as a third lateral face (LF3) of the chromatic separator (CS), this third lateral face (LF3) connecting the two opposite lateral faces (LF1, LF2) through which the two monochrome beams (BB, RB) exit the parallelepiped (p).

16. Projector according to Claim 15, characterized in that the length of the imagers (I1, I2, I3) is parallel to the length of the third lateral face (LF3).

17. Projector according to Claim 16, characterized in that two imagers (I1, I2) are placed in the extension of the length of the third lateral face (LF3), on either side of the latter.

18. Projector according to Claim 17, characterized in that a third imager (I3) is placed on the side of the third lateral face (LF3) so that its width is added to that of this third lateral face.

19. Projector according to one of Claims 10 to 18, characterized in that it furthermore includes one projection objective (01, 02, 03) per monochrome beam.

20. Projector according to Claim 19, characterized in that the projection objectives (01, 02, 03) are placed on the same axis of propagation (Z1, Z2, Z3) of a monochrome beam as the imager (I1 to I3) with which they are associated.

21. Projector according to any one of Claims 10 to 20, characterized in that a field lens (FL) is interposed in the path of at least one monochrome beam (BB, RB, GB) upstream of the imager (I1, I2, I3) along the direction of propagation of the beam.

22. Projector according to any one of Claims 10 to 21, characterized in that at least one retarding plate (RP) is placed in the path of at least one monochrome beam (BB, RB, GB) upstream of the imager (I1, I2, I3) along the direction of propagation of the beam.

23. Projector according to any one of Claims 10 to 22, characterized in that the imagers (I1, I2, I3) are liquid crystal matrix screens.

24. Projector according to any one of Claims 10 to 23, characterized in that the said image projector is of the "rear-projector" type.

FIG.1

FIG.2

# FIG.3

EP 0 572 292 B1

FIG.4a

FIG.4b

# FIG.5

# FIG.6

# FIG.7

# FIG.8

# FIG.9

# FIG.10